# EUROPEAN PATENT APPLICATION

(11) **EP 2 341 448 A1**
(43) Date of publication of application: **06.07.2011**
(21) Application number: 09180838.6
(22) Date of filing: 29.12.2009
(51) Int. Cl.: G06F 17/17, F02D 41/24, G06F 1/03

(54) **An electronic control unit and a method of performing interpolation in the electronic control unit**

(71) Applicant: Robert Bosch GmbH, 70469 Stuttgart (DE)
(72) Inventor: Pitzal, Volker, 73550, Waldstetten/Wissgoldingen (DE); Schulz, Udo, 71665, Vaihingen/Enz (DE)

(57) **Abstract**

The invention relates to an electronic control unit (12) comprising a first processor (16), a second processor (20) and a memory (18). A main program is run in the first processor (16) and an interpolation program is run in the second processor (20). The interpolation program is being run parallel to the main program. The main program and the interpolation process data for real time systems. Further the invention relates to a method of performing interpolation in an electronic control unit. (Fig. 3)

## Description

### Field of the invention

This invention relates to an electronic control unit and a method for performing interpolation in the electronic control unit.

### State of the art

US patent number 7349936 discloses an interpolation method and a computer system for carrying out the interpolation using a control program. The computer system comprises a plurality of CPU's and a memory. The computer system loads the control program into the memory, performs predetermined interpolation functions and results of the interpolation are stored back in the memory.

### Advantages of the invention

The electronic control unit and the method of performing interpolation according to the independent claims have the following advantage.

The electronic control unit and the method of performing interpolation allow the main program to be run in the first processor and the interpolation is done in the second processor. By performing the interpolation in the second processor, the main program flow in the first processor is not interrupted. This increases the speed with which the main program is executed.

The resources of the first processor and the second processor are dedicated to performing the main program and the interpolation respectively. This allows the main program and interpolation to be executed in a more efficient manner.

The main program and the interpolation are done in parallel. This allows the main program to execute other function not associated to the interpolation. This makes the main program run faster, thus reducing the overall time required for execution of the main program.

For real time application by performing the interpolation in a second processor parallel to the main program enables the results of the interpolation to be readily available to the main program. Thus there is no waiting time for the main program for the initiation and execution of the interpolation. This reduces the response time of the main program and increases the overall efficiency of a real time system.

Further improvements and/or advantages are realised by the features of the dependent claims.

The first processor providing the trigger to the second processor enables the results of the interpolation to be available before the first processor actually requires the results. The second processor self triggering the interpolation enables the interpolation to be done independent of the first processor. Thus as soon as the inputs for interpolation are available the interpolation is initiated and results are readily available to the first processor. Thus the first processor has no waiting time for the results of the interpolation. This reduces the overall time required for the main program. This in turn reduces the response time and increases efficiency of the system.

### Brief description of the drawings

Different modes of the invention are disclosed in detail in the description as illustrates in the accompanying drawings:
- Figure 1: illustrates a vehicle in which a plurality of vehicle components and electronic control units are connected to each other through a communication network;
- Figure 2: illustrates a conventional electronic control unit;
- Figure 3: illustrates a graph representing a relation between the ignition angle, load and engine speed in a vehicle; and
- Figure 4: illustrates an electronic control unit in accordance with our invention.

### Detailed description of the invention

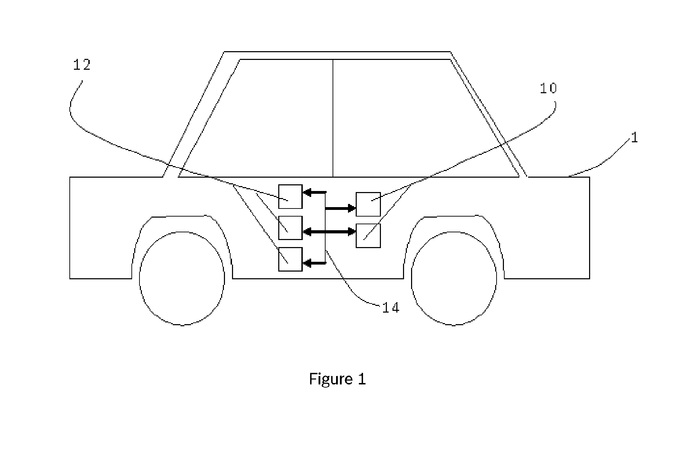

Figure 1 illustrates a vehicle 1 in which plurality of vehicle components 10 and electronic control units 12 are connected through a bus system 14 in a vehicle. The connection via the bus system 14 facilitates the electronic control units 12 and the vehicle components 10 to interact with each other. The components 10 are sensor, actuators and the like. The sensors continuously provide information to the electronic control units 12 regarding the functioning of the vehicle components 10 such as the engine, fuel injection systems, braking systems, airbag system and the like. The actuators receive control signals from the electronic control units 12 and influence the operation of the vehicle 1. Sometimes the sensors and actuators are directly connected to the electronic control units 12 and hence directly communicate with the electronic control units 12 without communicating through the bus system. Vehicles today make use of a large number of electronic control units 12 which control the functioning of different systems in a vehicle 1.

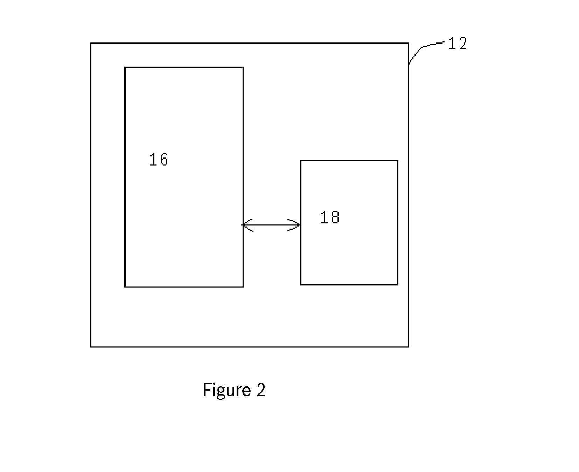

Figure 2 illustrates an electronic control unit 12 comprising at least a processor or controller 16 and memory 18. For our explanation we use as an example, an electronic control unit 12 which besides other calculations, calculates ignition angle based on two input parameters, engine load and engine speed.

The operation of the internal components of the engine is such that the reciprocatory motion of the piston in the cylinder is converted into rotational motion of a crank which provides rotational motion to the wheels through a crank shaft. This makes the vehicle move. When the piston reciprocates in the cylinder from the top of the cylinder to the bottom and back to the top, this is as one revolution of the crank. Engine speed is measured in terms of number of revolutions of the crank per minute i.e revolution per minute. The moment or force required for one revolution of the crank is the load of the engine. If the vehicle is heavier, then the engine will have to produce more energy i.e. more moment or force is required to move the vehicle. Thus, a higher engine load is required to move a heavier vehicle. But, for the engine to be able to continue working a mixture of fuel and air has to be provided to the engine and this mixture has to be ignited by means of a spark. The precise point in time when the mixture has to be ignited is determined by the ignition angle. Thus, for every combination of engine load and engine speed the ignition angle has to be determined. For different combinations of engine load and engine speed the ignition angle will vary.

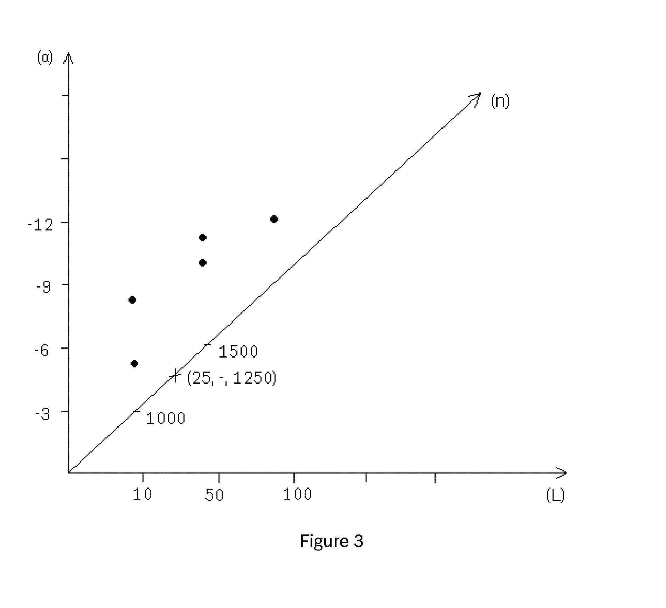

In the electronic control unit 12, the values corresponding to each of the combinations are stored and the graphical representation of the relationship between the ignition angle, load and engine speed can be seen in figure 3 by plotting Load (L) on the x-axis against Engine speed (n) on the z-axis, and the ignition angle (α) on the y-axis. A table representing values corresponding to each of the combinations is as shown below. This table is stored in the memory 18 of the electronic control unit 12.

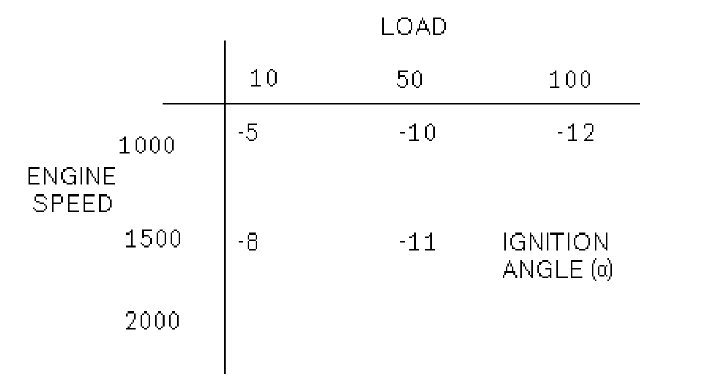

Using the look-up table stored in the memory 18 of the electronic control unit 12 it is possible to calculate ignition angle for other intermediate combinations of load and engine speed. For example if the ignition angle has to be calculated for operating condition indicated by the plus sign in figure 3, for L=25 and n=1250, the look-up table stored in the memory 18 of the electronic control unit 12 is used. Since the number of sampling points of the ignition angle as a function of engine load and engine speed is limited it is necessary to calculate the ignition angles at load and engine speed values between the samples as seen in the table above. For this calculation the values of the ignition angle have to be interpolated between the existing samples.

For the interpolation, the processor 16 of the electronic control unit 12 as seen in figure 2, performs a search in the look-up table stored in the memory 18 of the electronic control unit 12 for neighbouring values to obtain the ignition angle. Thus calculating ignition angle using interpolation involves at least the following steps: invoking a search algorithm for searching the look-up table for neighbouring values closest to the desired operating conditions or operation points. Referring to the table shown this involves firstly at least identifying four neighbouring values. Then the relative distance of the operating conditions or operating points and the next neighbouring points has to be determined and the ignition value has to be calculated using the ignition value of the neighbouring operating points (or sampling points). This is done by using the relative distance of the actual operating points from the neighbouring points. A lot of the processing time of the processor 16 is used to perform this interpolation for calculation of ignition angle. In practice the interpolation process may involve processing of many more steps and become more complicated.

Further, the interpolation may only be one of the many steps or a smaller program which forms a part of a larger main program being executed in the processor 16. If the electronic control unit 12 comprises one processor 16 which executes instructions or programs in a serial order, then the interpolation would be executed only when the interpolation program serially appears in the main program flow. Thus there would be a mandatory waiting time for the interpolation program to be initiated. Further the main program always has to wait until the interpolation is completed. So the main program becomes slow.

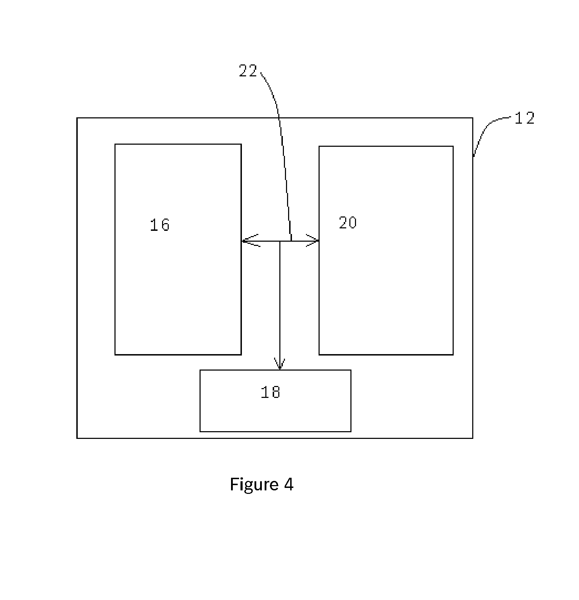

One important aspect of our invention is to reduce the time required for the performing the interpolation without interrupting the program flow. This would result in an overall increase in efficiency of the system. This is realized by performing the interpolation in a separate processor using an electronic control unit as shown in figure 4.

Figure 4 illustrates an electronic control unit 12 comprising at least, a first processor 16, a memory 18 and a second processor 20. The communication between the first processor 16, memory 18 and second processor 20 is done through a bus system 22. In the electronic control unit 12, a main program is run in a first processor 16 and the interpolation is performed in a second processor 20. The steps involved in performing the interpolation in a second processor 20 and the main program in the first processor 16 can be implemented in different ways.

A first method to perform the interpolation is done by the first processor 16 giving a trigger to the second processor 20. While providing the trigger the first processor 16 also provides the required load and engine speed for the calculation of ignition angle. The second processor 20 then performs interpolation for the load and engine speed and calculates the ignition angle. The value of the ignition angle is then given back to the first processor 16 or stored in the memory 18.

A second method to perform the interpolation is done by the first processor 16 providing a trigger. The second processor 20 on reception of the trigger retrieves the current value for load and engine speed from the memory 18 or these values are taken directly from the load and engine speed sensors. The second processor 20 then performs interpolation to calculate the value of ignition angle. The value of the ignition angle is then given back to the first processor 16 or stored in the memory 18.

A third method to perform interpolation is done by the second processor 20 itself generating a trigger to perform interpolation. The current load and engine speed values required are retrieved from the memory 18 or taken directly from the load and engine speed sensors and the ignition angle is calculated. The value of the ignition angle calculated from the interpolation is given back to the first processor 16 or stored in the memory 18.

Another method in which the triggering of interpolation in the second processor 20 is initiated when the inputs required for performing interpolation are available. As soon as the inputs from the load and engine speed sensors are available, the interpolation is triggered and the ignition angle is calculated. Yet another method in which triggering of interpolation in the second processor 20 is initiated is when local copies of the load and engine speed inputs stored in the memory are made. Local copies of the inputs represent a working copy of the inputs. Thus when a local copy is made the inputs remain unaltered in the memory and will be used later when required. Interpolation is triggered when the local copies of the inputs are available. These two ways of triggering interpolation in the second processor 20 is independent of any trigger from the first processor 16. This also ensures that the results of the interpolation done in the second processor 20 are readily available to the first processor 16.

In the methods explained above we observe that the interpolation is done in a second processor 20 and not in the first processor 16 in which the main program is running. Thus, the main program flow is not interrupted. Also the use of a second processor 20 allows all the resources of the second processor 20 to be used for performing interpolation and all the resources of the first processor 16 to be used for executing the main program. This makes the process of executing the main program faster. While performing interpolation in the second processor 20, the interpolation is done parallel to the main program. The main program does not have to wait for the interpolation to be initiated and completed to perform remaining functions which are not associated to the interpolation. The results of the interpolation required by the first processor 16 are directly provided to the first processor 16 or stored in the memory 18. Thus, when the first processor 16 requires the results of the interpolation, these results are readily available and there is no waiting time for the first processor. This makes the execution of the main program faster and increases the overall efficiency of the system.

When the results of the interpolation are available in the second processor 20, they are sent to the first processor 16 or stored in a memory. If the first processor 16 needs the results of interpolation, it checks if the results of the interpolation available correspond with particular set of input value. The check is done to validate if the results of the interpolation for a set of input values is within the range of input values for which the first processor requires. If the result of the interpolation does not correspond to the set of input values which the first processor 16 requires or if the result of interpolation corresponds to a set of input values which is outside a range of input values which the first processor 16 requires, then the result of the interpolation is not used by the first processor 16. The second processor 20 can then be triggered to perform interpolation for the current set of input values. This method of the first processor 16 validating the result of interpolation with the corresponding input value ensures that correct value of the interpolated result is available for further processing. This ensures that incorrect results of interpolation are not provided to the first processor thus increasing the efficiency of the system.

Performing the interpolation in a second processor 20 is particularly advantageous in a real time system. A real time system may be defined as a system wherein different calculations have to be done and results of the calculations should be available before a fixed time deadline. If the results of the calculations are not available before the fixed deadline then the system fails. Further, other systems based on the results of the calculations in the real time system also fail. The example used before of the engine management system used to calculate the ignition angle is a real time system. In practice, for calculation of ignition angle in a vehicle, the number of look-up tables used and stored in the memory 18 of the electronic control unit 12 is large. Further the number of parameters represented in the look-up tables is high. Also the distribution of the ignition angle values for corresponding values of load and engine speed is not uniform, this makes the look-up tables more complex. To perform interpolation using complex look-up tables in a real time system requires many iterations. Thus by performing interpolation in a second processor 20, wherein resources of the second processor 20 are dedicated to performing the interpolation increase the efficiency of the interpolation. Also in real time systems where results of the interpolation are required before a fixed time deadline, performing interpolation in a second processor ensures that the results are readily available to the first processor 16 whenever the first processor requires the result. Also the main program running in the first processor 16 is not interrupted this enables faster processing of the main program. This reduces the response time of the main program and increases overall efficiency of the system.

## Claims

1. An electronic control unit (12), said electronic control unit (12) comprising at least, a first processor (16), a second processor (20) and a memory (18), said electronic control unit adapted to execute a main program comprising an interpolation program,
**Characterized in that** said main program is run in said first processor (16) and said interpolation program is run in said second processor (20), said interpolation program being run parallel to the main program, said main program and said interpolation processing data for real time systems.

2. A method of performing interpolation in an electronic control unit (12), said electronic control unit (12) being adapted to run a main program comprising an interpolation program, said method comprising the following steps:
(i) triggering said interpolation program in a second processor (20);
(ii) executing the interpolation program in a said second processor (20) parallel to said main program; and
(iii) storing results of interpolation.

3. A method as claimed in claim 2, wherein said interpolation main program and said interpolation program are adapted to processor data for real time systems.

4. A method as claimed in claim 2, wherein said interpolation in said second processor is triggered by said first processor.

5. A method as claimed in claim 2, wherein said interpolation in said second processor is triggered by said second processor.

6. A method as claimed in claim 2, wherein result of said interpolation is stored in a memory of said electronic control unit.

7. A method as claimed in claim 2, wherein result of said interpolation performed in said second processor is given to said first processor.
